# EUROPÄISCHE PATENTSCHRIFT

(11) **EP 2 350 499 B1**
(45) Veröffentlichungstag und Bekanntmachung des Hinweises auf die Patenterteilung: **20.03.2013**
(21) Anmeldenummer: 09783531.8
(22) Anmeldetag: 29.09.2009
(51) Int. Cl.: F16H 61/14

(54) **VERFAHREN ZUR ANSTEUERUNG EINER ÜBERBRÜCKUNGSKUPPLUNG EINES HYDRODYNAMISCHEN DREHMOMENTWANDLERS**
METHOD FOR CONTROLLING A LOCK-UP CLUTCH OF A HYDRODYNAMIC TORQUE CONVERTER
PROCÉDÉ DE COMMANDE D'UN EMBRAYAGE DE PONTAGE D'UN CONVERTISSEUR DE COUPLE HYDRODYNAMIQUE

(30) Priorität: 23.10.2008 DE 102008043110
(43) Veröffentlichungstag der Anmeldung: 03.08.2011
(73) Patentinhaber: ZF Friedrichshafen AG, 88038 Friedrichshafen (DE)
(72) Erfinder: HÖFLER, Hans, 88090 Immenstaad (DE); KURZ, Thomas, 88085 Langenargen (DE)
(86) Internationale Anmeldenummer: PCT/EP2009/062592
(87) Internationale Veröffentlichungsnummer: WO 2010/046204

(56) Entgegenhaltungen:
- DE-A1- 4 030 811
- DE-A1- 4 427 359

## Beschreibung

Die Erfindung betrifft ein Verfahren zur Ansteuerung einer Überbrükkungskupplung eines hydrodynamischen Drehmomentwandlers nach der im Oberbegriff von Anspruch 1 näher definierten Art.

Überbrückungskupplungen in hydrodynamischen Drehmomentwandlern werden verwendet, um den Antrieb des hydrodynamischen Drehmomentwandlers mit seinem Abtrieb direkt zu verbinden, wodurch ein direkter Durchtrieb vom Antriebsmotor zum nachgeschalteten Getriebe stattfindet und der Wirkungsgrad des Gesamtsystems verbessert werden kann.

Die DE 4030811 A1 offenbart ein Verfahren zur Ansteuerung einer Überbrückungskupplung eines hydrodynamischen Drehmomentwandlers, welche so angesteuert wird, dass in Abhängigkeit der Änderung der Motorlast die Überbrückungskupplung in einen Schlupfzustand gebracht wird, wobei ein definiertes Schlupfausmaß eingestellt wird.

Der vorliegenden Erfindung liegt die Aufgabe zugrunde ein Verfahren zur Ansteuerung einer Überbrückungskupplung eines hydrodynamischen Drehmomentwandlers zu schaffen, bei welchem das Fahrverhalten des Fahrzeugs, insbesondere einer Arbeitsmaschine, wie beispielsweise eines Radladers, weiter verbessert wird.

Die Aufgabe wird mit einem auch die kennzeichnenden Merkmale des Hauptanspruchs aufweisenden gattungsgemäßen Verfahren zur Ansteuerung einer Überbrückungskupplung eines hydrodynamischen Drehmomentwandlers gelöst.

Erfindungsgemäß wird der eingelegte Gang des Getriebes, das Antriebsdrehmoment des Getriebes und die Turbinendrehzahl des hydrodynamischen Drehmomentwandlers ermittelt und in Abhängigkeit dieser Parameter die Überbrückungskupplung im Schließsinne betätigt. Befindet sich der Antriebsmotor, beispielsweise ein Verbrennungsmotor, im Volllastbetrieb, so wird die Überbrückungskupplung des hydrodynamischen Drehmomentwandlers im Schließsinne betätigt, wenn das Drehmoment am Turbinenrad des hydrodynamischen Drehmomentwandlers bei geschlossener Überbrückungskupplung und bei offener Überbrückungskupplung gleich groß ist. Dadurch wird die Überbrükkungskupplung vor einem Hochschaltvorgang in den nächsten Gang geschlossen und somit während dieses Schaltvorgangs im Schließsinne betätigt und bei einer Rückschaltung in den nächsten Gang bleibt die Überbrückungskupplung ebenfalls geschlossen.

Beim Betrieb des Antriebmotors in einem Teillastbetrieb schließt die Überbrückungskupplung erst bei deutlich höheren Drehzahlen des Turbinenrades, wodurch die Schaltungen im Teillastbereich des Antriebmotors mit im Öffnungssinne betätigter Überbrückungskupplung stattfinden. Der Schaltübergang in den nächst höheren, beziehungsweise den nächst niedrigeren Gang, im Teilastbereichs des Antriebmotors erfolgt somit mit geöffneter Überbrükkungskupplung. Die Überbrückungskupplung schließt nach Abschluss des Schaltvorgangs im nächst höheren Gang, wenn die dort definierten Schließbedingungen vorliegen.

Werden die Schaltpunkte zum Betätigen der Überbrückungskupplung ausschließlich aus der Drehzahldifferenz zwischen dem Turbinenrad und dem Pumpenrad des hydrodynamischen Drehmomentwandlers ermittelt, so ändert sich das Fahrverhalten, insbesondere bei einer Arbeitsmaschine, wie bei einem Radlader, in den unteren Gängen bei Fahrgeschwindigkeiten im Bereich von 12 km/h erheblich zu einem Fahrverhalten beim Betrieb des Fahrzeugs in den höheren Gängen.

Durch das erfindungsgemäße Verfahren wird das Fahrverhalten beim Betrieb der Arbeitsmaschine in den unteren Gängen an das Fahrverhalten zum Betrieb der Arbeitsmaschine in den höheren Gängen abgeglichen.

In einer weiteren Ausgestaltungsform der Erfindung gibt es für jeden Gang eine separate Kennlinie zum Einstellen der Schaltschwellen, bei welchen das Getriebeeingangsdrehmoment und die Turbinendrehzahl definiert sind, um bei jedem Gang die optimalen Schaltpunkte zum Schließen der Überbrückungskupplung einzustellen.

## Patentansprüche

1. Verfahren zur Ansteuerung einer Überbrückungskupplung eines hydrodynamischen Drehmomentwandlers mit einem Turbinenrad, welcher einen Antriebsmotor mit einem Getriebe mit mindestens zwei schaltbaren Gängen verbindet, wobei die Überbrückungskupplung im Schließsinne betätigbar ist und dabei den Antrieb des hydrodynamischen Drehmomentwandlers mit seinem Abtrieb direkt verbindet und im Öffnungssinne betätigbar ist und dabei die Verbindung trennt, wobei die Turbinendrehzahl, das Antriebsdrehmoment des Getriebes und der eingelegte Gang ermittelt werden und in Abhängigkeit des Drehmoments des Getriebes, der Turbinendrehzahl und des eingelegten Gangs des Getriebes die Überbrückungskupplung im Schließsinne betätigt wird und dabei den Antrieb des hydrodynamischen Drehmomentwandlers mit seinem Abtrieb direkt verbindet, **dadurch gekennzeichnet, dass** bei Betrieb des Antriebmotors unter Volllast die Überbrückungskupplung dann im Schließsinne betätigt wird und dabei den Antrieb des hydrodynamischen Drehmomentwandlers mit seinem Abtrieb direkt verbindet, wenn das Drehmoment des Turbinenrades bei im Schließsinne betätigter Überbrückungskupplung und im Öffnungssinne betätigter Überbrückungskupplung nahezu gleich groß ist und die Überbrückungskupplung bei Betrieb des Antriebmotors in einem Teillastbereich erst bei höheren Turbinendrehzahlen im Schließsinne betätigt wird als die Turbinendrehzahlen, bei welchen die Überbrückungskupplung im Schließsinne betätigt wird, wenn sich der Antriebsmotor bei Volllast befindet, wodurch bei einer Schaltung des Getriebes in einen anderen Gang, während der Antriebsmotor in einem Teillastbereich betrieben wird, die Überbrückungskupplung im Öffnungssinne betätigt ist und bei einer Schaltung des Getriebes in einen anderen Gang, während der Antriebsmotor in einem Volllastbereichs betrieben wird, die Überbrückungskupplung im Schließsinne betätigt ist.

2. Verfahren zur Ansteuerung einer Überbrückungskupplung nach Anspruch 1, **dadurch gekennzeichnet, dass** bei mehr als zwei Gängen des Getriebes zu jedem Gang ein Drehmoment des Getriebes und eine Turbinendrehzahl definiert wird, bei welcher die Überbrückungskupplung im Schließsinne betätigt wird.

## Claims

1. Method for controlling a lock-up clutch of a hydrodynamic torque converter with a turbine wheel which connects a drive motor to a transmission with at least two shiftable gears, wherein the lock-up clutch can be actuated in the closing direction and therein connects the drive of the hydrodynamic torque converter directly to its output and can be actuated in the opening direction and therein breaks the connection, wherein the turbine rotational speed, the drive torque of the transmission and the engaged gear are identified and, as a function of the torque of the transmission, the turbine rotational speed and the engaged gear of the transmission, the lock-up clutch is actuated in the closing direction and therein connects the drive of the hydrodynamic torque converter directly to its output, **characterized in that**, in the case of operation of the drive motor under full load, the lock-up clutch is then actuated in the closing direction and therein connects the drive of the hydrodynamic torque converter directly to its output when the torque of the turbine wheel is almost of equal size when the lock-up clutch is actuated in the closing direction and the lock-up clutch is actuated in the opening direction and the lock-up clutch, during operation of the drive motor in a partial load range, is only actuated in the closing direction in the case of higher turbine rotational speeds than the turbine rotational speeds at which the lock-up clutch is actuated in the closing direction when the drive motor is under full load, as a result of which, in the case of a shift of the transmission into a different gear while the drive motor is operated in a partial load range, the lock-up clutch is actuated in the closing direction and in the case of a shift of the transmission into a different gear while the drive motor is operated in a full load range, the lock-up clutch is actuated in the closing direction.

2. Method for controlling a lock-up clutch according to Claim 1, **characterized in that**, in the case of more than two gears of the transmission, for each gear a torque of the transmission and a turbine rotational speed is defined at which the lock-up clutch is actuated in the closing direction.

## Revendications

1. Procédé de commande d'un embrayage de pontage d'un convertisseur de couple hydrodynamique comprenant un rotor de turbine, lequel convertisseur de couple relie un moteur d'entraînement à une transmission comprenant au moins deux rapports pouvant être passés, l'embrayage de pontage pouvant être actionné dans le sens de la fermeture et reliant en l'occurrence l'entraînement du convertisseur de couple hydrodynamique directement à sa sortie, et pouvant être actionné dans le sens de l'ouverture et désaccouplant en l'occurrence la liaison, le régime de la turbine, le couple d'entraînement de la transmission et le rapport enclenché étant déterminés et, en fonction du couple de la transmission, du régime de la turbine et du rapport enclenché de la transmission, l'embrayage de pontage étant actionné dans le sens de la fermeture et reliant en l'occurrence l'entraînement du convertisseur de couple hydrodynamique directement à sa sortie, **caractérisé en ce que**, lors du fonctionnement à pleine charge du moteur d'entraînement, l'embrayage de pontage n'est actionné dans le sens de la fermeture et en l'occurrence ne relie l'entraînement du convertisseur de couple hydrodynamique directement à sa sortie que lorsque le couple du rotor de turbine est presque égal lorsque l'embrayage de pontage est actionné dans le sens de la fermeture et lorsque l'embrayage de pontage est actionné dans le sens de l'ouverture, et lors du fonctionnement du moteur d'entraînement dans une plage de charge partielle, l'embrayage de pontage n'est actionné dans le sens de la fermeture à des régimes de turbine supérieurs aux régimes de turbine pour lesquels l'embrayage de pontage est actionné dans le sens de la fermeture que lorsque le moteur d'entraînement fonctionne à pleine charge, de sorte que lors d'un passage de la transmission à un autre rapport, pendant que le moteur d'entraînement fonctionne dans un plage de charge partielle, l'embrayage de pontage soit actionné dans le sens de l'ouverture et lors d'un passage de la transmission à un autre rapport, pendant que le moteur d'entraînement fonctionne dans une plage de pleine charge, l'embrayage de pontage soit actionné dans le sens de la fermeture.

2. Procédé de commande d'un embrayage de pontage selon la revendication 1, **caractérisé en ce que**, lorsque la transmission comprend plus de deux rapports, un couple de la transmission et un régime de la turbine sont définis pour chaque rapport, pour lequel régime de la turbine l'embrayage de pontage est actionné dans le sens de la fermeture.
